(19) **Europäisches Patentamt**
**European Patent Office**
**Office européen des brevets**

(11) **EP 4 703 934 A1**

(12) **EUROPEAN PATENT APPLICATION**

(43) Date of publication:
04.03.2026 Bulletin 2026/10

(21) Application number: 25196743.6

(22) Date of filing: **19.08.2025**

(51) International Patent Classification (IPC):
**G06F 21/57** (2013.01)    **H04L 9/40** (2022.01)
**G06F 8/65** (2018.01)

(52) Cooperative Patent Classification (CPC):
**G06F 21/577; G06F 8/65; G06F 9/455;**
**H04L 63/1433**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **30.08.2024 US 202463689005 P**
**03.07.2025 US 202519259129**

(71) Applicant: **Dynatrace LLC**
**Boston, Massachusetts 02210 (US)**

(72) Inventors:
• **Remplbauer, Philipp**
**Wien (AT)**
• **Kahlhofer, Mario**
**Wien (AT)**

(74) Representative: **Steffens, Adrian**
**Boehmert & Boehmert**
**Anwaltspartnerschaft mbB**
**Pettenkoferstraße 22**
**80336 München (DE)**

(54) **PRIORITIZED UPDATING OF SOFTWARE IN A DISTRIBUTED COMPUTING ENVIRONMENT**

(57)    A prioritized method is presented for updating software in a distributed computing environment. The objective of the disclosure is to find a computer-implemented method for updating software on pods in the distributed computing environment. This is solved by calculating a risk rating for each pod in the manifest, taking into account a vulnerability score of the pod, the minimum number of inbound hops for reaching the pod, and the communication relationship between the given pod and other pods. Pods in the manifest are updated in accordance with the calculated risk ratings. (Fig. 1)

Fig-1

EP 4 703 934 A1

**Description**

Field

The present disclosure relates to the prioritized updating of software in a distributed computing environment. In particular, the disclosure relates to a computer-implemented method for updating software in a distributed computing environment, and a non-transitory computer-readable medium having computer-executable instructions that, upon execution of the instructions by a processor of a computer, cause the computer to update software in a distributed computing environment.

Background

In a distributed computing environment, software is distributed over a cluster of multiple, sometimes tens, hundreds or even thousands, of computing nodes. In case, software running on a computing node is found to be affected by a vulnerability, commonly referred to as Common Vulnerabilities and Exposures (CVE), the order of updating vulnerable software in the cluster needs to be determined. For many known vulnerabilities, vulnerability databases such as the National Vulnerability Database https://nvd.nist.gov/ provide vulnerability metrics (commonly referred to as vulnerability score) such as the Common Vulnerability Scoring System (CVSS) as a qualitative measure of severity of the vulnerability. In prior art it is known to update vulnerable software according to the vulnerability score, irrespective of the structure of the cluster. However, this does not take into account the structure of the distributed computing environment / cluster. How to improve this situation is not known in the art.

This section provides background information related to the present disclosure which is not necessarily prior art.

Summary

The objective of the disclosure is to find a computer-implemented method for updating software on pods/instances in a distributed computing environment that fulfils at least some of the following criteria:

1. Updating vulnerabilities in pods/instances being reachable directly from the internet should have a high priority,
2. Updating vulnerabilities in pods/instances being reachable indirectly from the internet should have a high priority, however, a lower priority than case 1,
3. Updating vulnerabilities in pods/instances containing critical infrastructure should have a high priority,
4. Updating vulnerabilities in pods/instances which can reach critical infrastructure should have a high priority, however, a lower priority than case 3,
5. Updating vulnerabilities in pods/instances having direct access to the internet should have a high priority, and
6. Updating vulnerabilities in pods/instances having indirect access to the internet should have a high priority, however, a lower priority than case 5.

According to a first aspect of the disclosure this objective is solved by a computer-implemented method for updating software in a distributed computing environment. Advantageous embodiments are described in the dependent claims.

In particular, the claim refers to a computer-implemented method for updating software in a distributed computing environment, comprising: receiving, by a computer processor, a manifest from a container orchestration system, where the manifest describes a portion of the network topology in the distributed computing environment; extracting, by the computer processor, pods enumerated in the manifest, where a pod specifies a container or group of containers in the network topology; for each pod in the manifest, determining, by the computer processor, whether a given pod is able to communicate with another pod in the manifest, thereby defining a communication relationship between the given pod and the another pod; for each pod in the manifest, determining, by the computer processor, the minimum number of inbound hops for reaching the pod from the outside of the distributed computing environment; for each pod in the manifest, receiving, by the computer processor, a vulnerability score for the pod considering software on the pod; for each pod in the manifest, calculating, by the computer processor, a risk rating taking into account the vulnerability score of the pod, the minimum number of inbound hops for reaching the pod, and the communication relationship between the given pod and other pods; and updating pods in the manifest in accordance with the calculated risk ratings.

In the first step, a manifest from a container orchestration system such as Kubernetes, Docker etc. describing at least a portion of the network topology in the distributed computing environment is received by a computer. Next, the computer extracts network entities, such as pods, namespaces, services, network policies etc. from the manifest, where a pod specifies a container or group of containers in the network topology. Based on the extracted pods, the computer determines whether a given pod is able to communicate with another pod in the manifest, thereby defining a potential communication relationship between the given pod and the other pod. The communication relationship between pods takes into account network policies in the manifest limiting ingress and/or egress communication between pods. After this, the computer determines for each pod in the manifest the minimum number of inbound hops for reaching the pod from the outside of the distributed computing environment. External entities need just one hop to reach pods directly accessible from the outside of the computing environment, whereas external entities need multiple hops to reach pods that aren't directly accessible from the outside. In addition, for each pod in the manifest a vulnerability score is formed. This can be done by looking up vulnerability scores for software components on a pod in a vulnerability database. The vulnerability score considers the name and the version of software components. Typically, the vulnerability score is a numerical value in a range between 0 and 10, where 0 indicates no vulnerability and 10 a super critical vulnerability. Then, the computer calculates a risk rating for each pod in the manifest taking into account the vulnerability score of the pod, the minimum number of inbound hops for reaching the pod, and the communication relationship between the given pod and other pods. Finally, vulnerable pods are updated based on the calculated risk ratings of the pods, typically updating pods having the highest risk ratings first, pods having medium risk ratings next and pods having low risk ratings at last.

Generally, the vulnerability score is indicative of the severity of a software vulnerability of the pod. The vulnerability score is typically taken from a vulnerability database.

In a preferred embodiment, the risk rating for a given pod sums up weighted or unweighted contributions of vulnerability scores for pods being reachable from the given pod by n hops, where $n \leq maxHops$. The variable maxHops defines the scope of neighboring pods considered in the analysis.

According to another advantageous embodiment of the disclosure, for each pod in the manifest a criticality score is set taking into account the criticality of resources of the pod or the criticality of the pod itself. The calculation of the risk rating additionally takes into account the criticality score for the pod.

In a particularly advantageous embodiment, the risk rating for a given pod sums up weighted or unweighted contributions of criticality scores for pods being reachable from the given pod by n hops, where $n \leq maxHops$. This can be done instead or in addition to summing up contributions of vulnerability scores for pods being reachable from the given pod.

It is preferred to reduce contributions of vulnerability scores and/or criticality scores for pods being reachable from the given pod by n hops according to the distance n between the given pod and the other pod. Generally, the bigger the distance n the smaller the contribution of the respective pod.

According to another advantageous embodiment, the computer determines for each pod in the manifest the minimum number of outbound hops for the pod reaching the outside of the distributed computing environment. The calculation of the risk rating takes additionally into account the minimum number of outbound hops for the pod.

In a typical case, pods in the manifest are sorted from highest risk rating to lowest risk rating. Updating of pods takes place with high risk ratings before updating pods with low risk ratings.

When updating vulnerable pods, one or more vulnerable software components are exchanged to non-vulnerable software components.

According to another aspect of the disclosure, the objective is solved by a non-transitory computer-readable medium having computer-executable instructions that, upon execution of the instructions by a processor of a computer, cause the computer to perform the computer-implemented method for updating software in a distributed computing environment. Advantageous embodiments are described in the dependent claims.

In particular, the claim refers to a non-transitory computer-readable medium having computer-executable instructions that, upon execution of the instructions by a processor of a computer, cause the computer to: receive a manifest from a container orchestration system, where the manifest describes a portion of network topology in the distributed computing environment; extract pods enumerated in the manifest, where a pod specifies a container or group of containers in the network topology; for each pod in the manifest, determine whether a given pod is able to communicate with another pod in the manifest, thereby defining a communication relationship between the given pod and the another pod; for each pod in the manifest, determine the minimum number of inbound hops for reaching the pod from the outside of the distributed computing environment; for each pod in the manifest, receive a vulnerability score for the pod considering software on the pod; for each pod in the manifest, calculate a risk rating taking into account the vulnerability score of the pod, the minimum number of inbound hops for reaching the pod, and the communication relationship between the given pod and other pods; and updating pods in the manifest in accordance with the calculated risk ratings.

According to yet another aspect of the disclosure, the objective is solved by a computer-implemented method for updating software in a distributed computing environment. Advantageous embodiments are described in the dependent claims.

In particular, the claim refers to a computer-implemented method for updating software in a distributed computing environment, comprising: receiving, by a computer processor, a manifest from a container orchestration system, where the manifest describes a portion of network topology in the distributed computing environment; extracting, by the computer processor, pods enumerated in the manifest, where a pod specifies a container or group of containers in the network topology; for each pod in the manifest, determining, by the computer processor, whether the given pod is able to communicate with another pod in the manifest, thereby defining a communication relationship between the given pod and the other pod; for each pod in the manifest, determining, by the computer processor, the minimum number of inbound hops for reaching the pod from the outside of the distributed computing environment; for each pod in the manifest, receiving, by the computer processor, a vulnerability score for the pod considering software on the pod; for each pod in the manifest, calculating, by the computer processor, a risk rating taking into account the vulnerability score of the pod, the minimum number of inbound hops for reaching the pod, and the communication relationship between the given pod and other pods; and updating network policies for pods in the manifest based on the calculated risk ratings, where a network policy specifies traffic flow between entities in the network topology.

In this embodiment, contrary to the embodiment of claim 1, vulnerable pods having a high-risk rating are not directly updated by exchanging vulnerable software components to non-vulnerable software components, but network policies in the manifest are either introduced or updated in order to limit traffic from and/or to the respective pod. This embodiment is particularly interesting in case a patch fixing a vulnerability is not yet available or the patch needs to be tested before updating. Instead of adding or updating network policies in the manifest, Service Meshs can be added or updated in the cluster to finetune networking and security for micro-services deployed in Kubernetes.

Typically, after a patch for fixing a vulnerability is available or was successfully tested, the vulnerable software component is exchanged to a non-vulnerable software component. After patching vulnerable software, the network policies can be changed back to the original status, i.e. before introducing or updating of network policies.

Generally, the vulnerability score is indicative of the severity of a software vulnerability of the pod. The vulnerability score is typically taken from a vulnerability database.

In a preferred embodiment, the risk rating for a given pod sums up weighted or unweighted contributions of vulnerability scores for pods being reachable from the given pod by n hops, where $n \leq maxHops$.

According to another advantageous embodiment of the disclosure, for each pod in the manifest a criticality score is set taking into account the criticality of resources of the pod or the criticality of the pod itself. The calculation of the risk rating additionally takes into account the criticality score for the pod.

In a particularly advantageous embodiment, the risk rating for a given pod sums up weighted or unweighted contributions of criticality scores for pods being reachable from the given pod by n hops, where $n \leq maxHops$. This can be done instead or in addition to summing up contributions of vulnerability scores for pods being reachable from the given pod.

It is preferred to reduce contributions of vulnerability scores and/or criticality scores for pods being reachable from the given pod by n hops according to the distance n between the given pod and the other pod. Generally, the bigger the distance n the smaller the contribution of the pod.

According to another advantageous embodiment, the computer determines for each pod in the manifest the minimum number of outbound hops for the pod reaching the outside of the distributed computing environment. The calculation of the risk rating takes additionally into account the minimum number of outbound hops for the pod.

In a typical case, pods in the manifest are sorted from highest risk rating to lowest risk rating. Updating of network policies takes place with high risk ratings before updating network policies with low risk ratings.

In many cases it is beneficial to restrict access to and/or access from a given pod in response to the risk rating exceeding a threshold. Therefore, the method may comprise restricting access to a given pod or access from a given pod in response to the risk ratings for the given pod exceeding a threshold.

Further areas of applicability will become apparent from the description provided herein. The description and specific examples in this summary are intended for purposes of illustration only and are not intended to limit the scope of the present disclosure.

Drawings

The drawings described herein are for illustrative purposes only of selected embodiments and not all possible implementations, and are not intended to limit the scope of the present disclosure.

FIG. 1    shows the structure and communication relationship of a Kubernetes cluster according to the first application example,

FIG. 2    shows the structure and communication relationship of a Kubernetes cluster according to the second application example,

FIG. 3    shows the structure and communication relationship of a Kubernetes cluster according to the third application example,

FIG. 4    shows the structure and communication relationship of a Kubernetes cluster according to the fourth application example, and

FIG. 5    shows a flowchart for the disclosed method for updating software in a distributed computing environment.

Corresponding reference numerals indicate corresponding parts throughout the several views of the drawings.

Detailed description

Example embodiments will now be described more fully with reference to the accompanying drawings.

In a first application example, a simple Kubernetes cluster will be investigated. The manifest for the cluster is given in Listings 1 to 8:

```
apiVersion: v1
kind: Pod
metadata:
name: frontend
namespace: default
labels:
  app.kubernetes.io/name: frontend
  app: frontend
  spec:
containers:
- name: frontend
  image: nginx:latest
  ports:
  - containerPort: 3000
    protocol: TCP
    ---
    apiVersion: v1
    kind: Service
    metadata:
name: frontend
namespace: default
spec:
ports:
- node Port: 30111
  port: 80
  protocol: TCP
  targetPort: 3000
selector:
  app.kubernetes.io/name: frontend
type: NodePort
Listing 1
```

```
apiVersion: v1
kind: Pod
metadata:
name: aux
namespace: default
labels:
  app: aux
  spec:
containers:
- name: aux
  image: nginx:latest
  ports:
  - containerPort: 3000
  protocol: TCP
  Listing 2
```

```
apiVersion: v1
kind: Pod
metadata:
name: gate
namespace: default
labels:
  app: gate
  spec:
containers:
- name: gate
  image: alpine:latest
  Listing 3
```

```
apiVersion: v1
kind: Pod
metadata:
name: db
```

```
namespace: default
labels:
  app: db
  spec:
containers:
- name: db
  image: db:latest
  env:
    - name: MYSQL_ROOT_PASSWORD
      value: "strong_password"
  ports:
    - containerPort: 3306
    Listing 4


apiVersion: networking.k8s.io/v1
kind: NetworkPolicy
metadata:
name: frontend-np
spec:
podSelector:
 matchLabels:
   app: frontend
policyTypes:
- Ingress
- Egress
ingress:
- from:
  - podSelector:
      matchLabels:
        app: gate
  - podSelector:
      matchLabels:
        app: aux
  - ipBlock:
      cidr: 192.0.0.0/16
egress:
- to:
  - podSelector:
      matchLabels:
        app: gate
  - podSelector:
      matchLabels:
        app: aux
        Listing 5


apiVersion: networking.k8s.io/v1
kind: NetworkPolicy
metadata:
name: aux-np
spec:
podSelector:
 matchLabels:
   app: aux
policyTypes:
- Ingress
- Egress
ingress:
- from:
  - podSelector:
      matchLabels:
        app: frontend
egress:
- to:
  - podSelector:
      matchLabels:
        app: frontend
        Listing 6


apiVersion: networking.k8s.io/v1
kind: NetworkPolicy
metadata:
name: gate-np
spec:
```

```
podSelector:
 matchLabels:
   app: gate
policyTypes:
- Ingress
- Egress
ingress:
- from:
  - podSelector:
     matchLabels:
       app: frontend
  - podSelector:
     matchLabels:
       app: db
egress:
- to:
  - podSelector:
     matchLabels:
       app: frontend
  - podSelector:
     matchLabels:
       app: db
       Listing 7
```

```
apiVersion: networking.k8s.io/v1
 kind: NetworkPolicy
 metadata:
 name: db-np
 spec:
 podSelector:
  matchLabels:
    app: db
 policyTypes:
 - Ingress
 - Egress
 ingress:
 - from:
   - podSelector:
      matchLabels:
        app: gate
 egress:
 - to:
   - podSelector:
      matchLabels:
        app: gate
        Listing 8
```

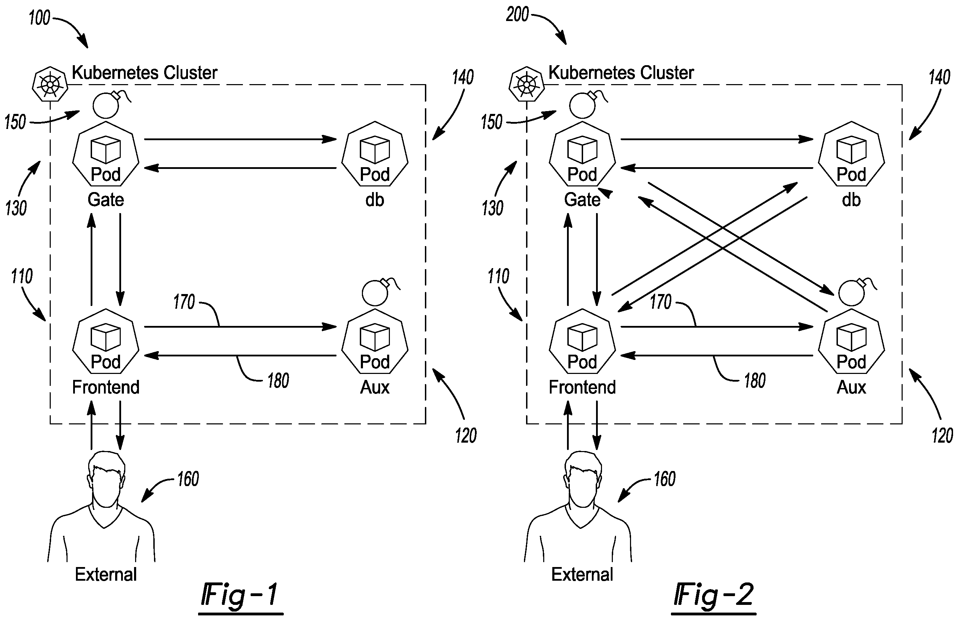

In a first step, the manifest in Listings 1-8 is read-in and the pods in the Kubernetes cluster 100 are identified. Doing this, identifies the pods "frontend" 110, "aux" 120, "gate" 130, and "db" 140. Next, the communication relationship between pods 110-140 considering network policies is determined. The determination is performed by applying a set of logical rules to the manifest, as described in US 63/569,262 filed by the applicant. The identification of pods and the determination of communication relationship between pods as described in US 63/569,262 is incorporated by reference. The allowed communication routes between pods 110-140 are shown in Fig. 1 by arrows 170, 180, e.g. the pod "frontend" 110 is reachable from the outside of the Kubernetes cluster 160, and bidirectional communication is allowed between "frontend" 110 and "aux" 120, "frontend" 110 and "gate" 130, and "gate" 130 and "db" 140, respectively.

The communication relationships are also given in Tab. 1:

*Tab. 1: Communication relationship in first application example*

| | | Target | | | | |
|---|---|---|---|---|---|---|
| | | **External** | **frontend** | **aux** | **gate** | **db** |
| **Source** | **External** | ✓ | ✓ | x | x | x |
| | **frontend** | ✓ | ✓ | ✓ | ✓ | x |
| | **aux** | x | ✓ | ✓ | x | x |
| | **gate** | x | ✓ | x | ✓ | ✓ |
| | **db** | x | x | x | ✓ | ✓ |

A check mark in Tab. 1 indicates that communication between two entities is allowed by the manifest, whereas x indicates a disallowed connection. E.g., incoming traffic from an external user 160 to the pod "frontend" 110 is allowed, therefore a check is present in the fourth column of the third row. On the other hand, outgoing traffic from the pod "db" 140 to an external user 160 is disallowed, therefore an x is present in the third column of the last row. The communication relationships according to the manifest define potential (meaning allowed) communication paths between pods; it is not necessary that actual communication takes place on an allowed communication paths.

Next, the minimum number of inbound hops (short NIH) and the minimum number of outbound hops (short NOH) for pods are determined, i.e. the number of inbound steps (hops) from the outside of the Kubernetes cluster to the respective pod, and the number of outbound steps (hops) from the respective pod to the outside of the cluster. The minimum number of inbound and outbound hops are given in Tab. 2:

*Tab. 2 Minimum of inbound and outbound hops NIH, NOH for first application example*

| **Pod** | frontend | aux | gate | db |
|---|---|---|---|---|
| **min(NIH)** | 1 | 2 | 2 | 3 |
| **min(NOH)** | 1 | 2 | 2 | 3 |

E.g., on an inbound journey, the external user 160 can reach the pod "gate" 130 by 2 hops, i.e. first hopping from the outside 160 to the pod "frontend" 110 and second hopping from "frontend" 110 to the pod "gate" 130. Thus, min(NIH)=2. Let us give another example: On an outbound journey, the pod "db" 140 can reach the external user 160 by 3 hops, i.e. first hopping from "db" 140 to "gate" 130, second from "gate" 130 to "frontend" 110 and third, from "frontend" 110 to the external user 160. Thus, min(NOH)=3. Although NIH and NOH for pods are identical in Tab. 2, this is not necessarily so. Actually, many cases exist where these numbers are different, i.e. $NIH \neq NOH$.

In order to categorize risk for pods, two risk scores are assigned to each pod. The first risk score RV1 (also called criticality score) indicates the risk posed by the pod itself, e.g. measuring the criticality of the pod being compromised, and the second risk score RV2 indicates the risk from known vulnerabilities affecting the pod. RV1 is highest for critical infrastructure pods in the cluster, e.g. a database, a secret manager etc. RV2 is typically taken from vulnerability websites, such as the National Vulnerability Database nvd.nist.org. E.g., the vulnerability base score for the vulnerability CVE-2023-5157 affecting the MariaDB according to CVSS Version 3.x is 7.5 on a scale between 0 and 10. According to the NVD vulnerability metrics system, the base score of 7.5 for CVSS v.3.x ratings is in the high severity score range. In case several software components on a pod are vulnerable, the highest vulnerability score RV2 of the vulnerable software components on the pod is used as vulnerability score RV2 for the pod. In this example it is assumed that both risk scores RV1 and RV2 have a numerical value between 0 and 10, where 10 indicates high risk. In addition to assigning risk scores RV1 and RV2 to pods, weights W1 and W2 can be introduced to weight the risk scores RV1 and RV2. For simplicity, it is assumed that the weights W1 and W2 are 1 in this example.

In the first application example, the following risk scores RV1, RV2 and weights W1, W2 are assumed:

*Tab. 3 Risk scores and weights*

| **Pod** | frontend | aux | gate | db |
|---|---|---|---|---|
| **RV1** | 3 | 3 | 6 | 10 |
| **RV2** | 0 | 8 | 7.5 | 0 |
| **W1, W2** | 1 | 1 | 1 | 1 |

In other words, the criticality score RV1 for the pod "db" 140 is considered to be highest, "gate" 130 has a medium criticality score, and the pods "frontend" 110 and "aux" 120 have rather low criticality scores RV1. On the other hand, it is assumed that the pods "frontend" 110 and "db" 140 are not vulnerable (RV2 = 0) and that the pods "aux" 120 and "gate" 130 are vulnerable, having RV2 of 8 and 6, respectively. The vulnerability of a pod is indicated by a bomb symbol 150 in Fig. 1.

In the next step, the neighborhood around each source pod up to a number of max hops (maxHops in equations) is investigated. In this example, we assume maxHops = 3 such that all pods being reachable from the source pod by n hops, where $n \leq maxHops$ Hops, are identified. By doing so, we omit circular connections, i.e. each pod is visited only once.

For the Kubernetes cluster depicted in Fig. 1, the following pods are reachable from a respective source pod within exactly n hops, and without visiting any pod more than once:

*Tab. 4 Neighborhood of source pods*

| Source pod | Reachable pods within n hops | | | | Set S of reachable pods within n hops $0 \leq n \leq maxHops$ |
|---|---|---|---|---|---|
| | n = 0 | n = 1 | n = 2 | n = 3 | |
| **frontend** | frontend | aux, gate | db | - | S = {frontend, aux, gate, db} |
| **aux** | aux | frontend | gate | db | |
| **gate** | gate | db, frontend | aux | - | |
| **db** | db | gate | frontend | aux | |

Pods reachable from a source pod within n hops, where n ≤ maxHops, are elements in the set S of reachable pods. In this case, S is constant for all pods. In many cases, S differs from pod to pod (see e.g. Tab. 5 below).

For illustration only, the set S of reachable pods assuming maxHops = 1 would be as follows:

*Tab. 5 Neighborhood of source pods for maxHops=1*

| Source pod | Reachable pods within n hops | | Set S of reachable pods within n hops $0 \leq n \leq maxHops$ |
|---|---|---|---|
| | n = 0 | n = 1 | |
| | | | |
| **frontend** | frontend | aux, gate | s={frontend, aux, gate} |
| **aux** | aux | frontend | s={aux, frontend} |
| **gate** | gate | db, frontend | s={gate, db, frontend} |
| **db** | db | gate | s={db, gate} |

Tab. 5 shows that S may be different for various source pods. As this was done for illustration only, subsequently maxHops = 3 is assumed.

Next, a risk rating RR is calculated for each pod taking into account the number of inbound hops, the connectivity of pods in the cluster, the first and second risk scores RV1 and RV2 and the weights W1 and W2. According to a first variant for the risk rating RR, the following equation is used:

$$RR|_{\text{source pod}} = \left(1 - \frac{\min\left(NIH|_{\text{source pod}}\right) - 1}{maxHops}\right) \sum_{pod \in S} \frac{W1.RV1 + W2.RV2}{n+1}$$

*Equ. 1 Risk rating RR - Variant 1*

In Equ. 1, n denotes the distance in hops from the source pod to another pod $\in S$ according to Tab. 4. In Equ. 1 the first term normalizes the minimum value of NIH by the maximum number of hops, resulting in a factor from 0 to 1, which is then multiplied by the weighted sum of risk scores, again normalized by the distance between the source pod and the another pod.

The respective risk rating RR for the pods in the cluster is:

$$RR|_{\text{frontend}} = \left(1 - \frac{1-1}{3}\right)\left(\underbrace{\frac{3+0}{0+1}}_{frontend} + \underbrace{\frac{3+8}{1+1}}_{aux} + \underbrace{\frac{6+7.5}{1+1}}_{gate} + \underbrace{\frac{10+0}{2+1}}_{db}\right) = 18.58$$

$$RR|_{\text{aux}} = \left(1 - \frac{2-1}{3}\right)\left(\underbrace{\frac{3+8}{0+1}}_{aux} + \underbrace{\frac{3+0}{1+1}}_{frontend} + \underbrace{\frac{6+7.5}{2+1}}_{gate} + \underbrace{\frac{10+0}{3+1}}_{db}\right) = 13$$

$$RR|_{\text{gate}} = \left(1 - \frac{2-1}{3}\right)\left(\underbrace{\frac{6+7.5}{0+1}}_{gate} + \underbrace{\frac{10+0}{1+1}}_{db} + \underbrace{\frac{3+0}{1+1}}_{frontend} + \underbrace{\frac{3+8}{2+1}}_{aux}\right) = 15.78$$

$$RR|_{\text{db}} = \left(1 - \frac{3-1}{3}\right)\left(\underbrace{\frac{10+0}{0+1}}_{db} + \underbrace{\frac{6+7.5}{1+1}}_{gate} + \underbrace{\frac{3+0}{2+1}}_{frontend} + \underbrace{\frac{3+8}{3+1}}_{aux}\right) = 6.83$$

As an example, the calculation of RR for the pod "frontend" 110 is explained in more detail. The minimum number of inbound hops NIH for the pod "frontend" 110 is 1 (see Tab. 2). Thus, the first factor in the equation is $1 - \frac{1-0}{3} = 1$ . The sum S sums up the ratio between the sum of the weighted risk scores RV1, RV2 divided by the distance n between the source pod and the respective pod plus 1. Summation is done for all pods being reachable from the source pod "frontend" within n hops, where $n \le maxHops$. Summation starts with n=0, i.e. the pod "frontend" itself. As W1 and W2 are both 1, the nominator is the sum of the risk scores 3+0. The denominator is 0+1=1. Summation continues with n=1, i.e. with pods one hop away from the source pod "frontend". These are the pods "aux" 120 and "gate" 130. For these pods, the respective contributions are added to the sum. The summation is continued with n=2, i.e. with pods two hops away from "frontend". Thus, the contribution of "db" 140 is added to the sum. Note that no pod has a distance of n=3 hops from the source pod, hence no additional contribution needs to be added.

The risk ratings RR for the pods are given below:

*Tab. 6 Risk ratings RR according to Equ. 1*

| pod | frontend | aux* | gate* | db |
|---|---|---|---|---|
| **RR\|pod** | 18.58 | 13 | **15.78** | 6.83 |

For the configuration of Fig. 1, the connectivity between pods in the cluster and the assumed values RV1, RV2, W1, W2, it is found that of the two vulnerable pods "gate" 130 and "aux" 120 (marked by a star in Tab. 5), "gate" 130 poses a higher risk and thus should be updated first. After updating "gate" 130, "aux" 120 shall be updated. Assuming that the pod "gate" runs a vulnerable version of the MariaDB software (see CVE-2023-5157 mentioned above) and considering that according to https://nvd.nist.gov/vuln/detail/CVE-2023-5157 software configurations up to 10.8.4 are vulnerable, then updating the pod involves exchanging the vulnerable version to a non-vulnerable version, e.g. versions 10.8.5 to 10.8.8 (see https://mariadb.org/mariadb/all-releases/). Other stable, non-vulnerable versions of the MariaDB software exist.

Next, a slightly more elaborated equation for calculating the risk ratings RR will be presented:

$$RR|_{\text{source pod}} = \left(1 - \frac{\min\left(NIH|_{\text{source pod}}\right) - 1}{maxHops}\right)\frac{1}{WF + |S| - 1}$$

$$\left[\overbrace{WF(W1.RV1 + W2.RV2)}^{source\ pod} + \sum_{pod \in S\ \wedge\ pod \notin source\ pod} \left(1 - \frac{n-1}{maxHops}\right)(W1.RV1 + W2.RV2)\right]$$

*Equ. 2 Risk rating RR - Variant 2*

Additionally to the parameters used in Equ. 1, a weighting factor WF weights the source pod stronger than pods having a distance of n>1 hops from the source pod. In the following calculation of RR, WF=2 is used, i.e. the source pod is weighed double. Furthermore, we assume W1=0.3 and W2=0.7.

Let us show the calculation according to Equ. 2 for the source pod "frontend" 110 of the Kubernetes cluster 100 shown in Fig. 1:

$$RR|_{\text{frontend}} = \left(1 - \frac{\min(NIH|_{\text{frontend}}) - 1}{maxHops}\right)\frac{1}{WF + |S| - 1}\left[\overbrace{WF(W1.RV1 + W2.RV2)}^{source\ pod=frontend}\right.$$

$$\left. + \sum_{pod \in S \wedge pod \notin frontend} \overbrace{\left(1 - \frac{n-1}{maxHops}\right)(W1.RV1 + W2.RV2)}^{pods\ having\ distance\ n>0\ hops\ from\ source\ pod}\right]$$

$$RR|_{\text{frontend}} = 1\frac{1}{2 + 4 - 1}\left[\overbrace{2(0.3 * 3)}^{frontend}\right.$$

$$\left. + \sum \overbrace{1(0.3 * 3 + 0.7 * 8)}^{aux} + \overbrace{1(0.3 * 6 + 0.7 * 7.5)}^{gate} + \overbrace{{}^{2}\!/_{3}\,(0.3 * 10)}^{db}\right] = 3.47$$

The calculation of RR for "frontend" 110 is explained in more detail. The first factor in the equation considers the distance between an external user 160 and the source pod 110. As "frontend" 110 is reachable from the outside by a single hop, the factor is 1 (see Tab. 2). The cardinality of pods being reachable within maxHops from the source pod '''frontend" 110 is 4 (see Tab. 4), thus |S|=4. Thus, the second factor in the equation is $\frac{1}{5} = 0.2$. The summation of risk scores RV1, RV2 considering weights W1, W2 and taking into account the distance n between the source pod and the other pod gives double weight to the source pod itself, i.e. WF=2. For pods having a distance n>0 from the source pod, the weighted risk is reduced according to the distance n. The factor $\left(1 - \frac{n-1}{maxHops}\right)$ in the sum for pods having a distance of $1 \leq n \leq 3$ hops, is 1 for n=1 , 2/3 for n=2 and 1/3 for n=3. This reflects the reduced risk posed by pods farther away from the source pod. The first term in the square bracket applies to the source pod 110 itself and is 2(0.3 * 3 + 0.7 * 0). The second term sums up the contributions in the sum S, i.e. for all pods element in S and not considering the source pod itself. Summation starts with n=1, i.e. with pods one hop away from the source pod "frontend". These are the pods "aux" 120 and "gate" 130. For these pods, the respective contributions are added to the sum. The summation is continued with n=2, i.e. with pods two hops away from "frontend" 110. Thus, the contribution of "db" 140 is added to the sum. Note that no pod has a distance of n=3 hops from the source pod, hence no additional contribution needs to be added. Thus, the risk rating for pod "frontend" is 3.47.

In contrast, the calculation for the pod "aux" 120 is as follows:

$$RR|_{\text{aux}} = \left(1 - \frac{\min(NIH|_{\text{aux}}) - 1}{maxHops}\right)\frac{1}{WF + |S| - 1}\left[\overbrace{WF(W1.RV1 + W2.RV2)}^{source\ pod = aux}\right.$$

$$\left. + \sum_{pod \in S \wedge pod \notin frontend} \overbrace{\left(1 - \frac{n-1}{maxHops}\right)(W1.RV1 + W2.RV2)}^{pods\ having\ distance\ n>0\ hops\ from\ source\ pod}\right]$$

$$RR|_{\text{aux}} = \left(1 - \frac{2-1}{3}\right)\frac{1}{2+4-1}\left[\overbrace{2(0.3*3 + 0.7*8)}^{aux} + \overbrace{1(0.3*3)}^{frontend} + \overbrace{\frac{2}{3}(0.3*6 + 0.7*7.5)}^{gate}\right.$$

$$\left. + \overbrace{\frac{1}{3}(0.3*10)}^{db}\right] = 2.61$$

By comparing the calculation of RR for pods "frontend" 110 and "aux" 120, it is obvious that a higher number of inbound hops reduces the overall risk rating. Performing the calculation of RR for all pods results in the following risk ratings:

*Tab. 7 Risk ratings RR according to Equ. 2*

| pod | frontend | aux* | gate* | db |
|---|---|---|---|---|
| RR\|<sub>pod</sub> | 3.47 | 2.61 | 3.13 | 1.05 |

Also according to Equ. 2, the vulnerable pod "gate" 130 shall be updated first as it has a higher risk rating RR than the vulnerable pod "aux" 120. The advantage of Equ. 2 over Equ. 1 is that the risk rating RR is normalized between 0 and 10, which makes interpretation simpler between different clusters.

A similar result can be achieved by using Equ. 3, which does not weigh the source pod differently than other pods.

$$RR|_{\text{source pod}} = \left(1 - \frac{\min(NIH|_{\text{aux}}) - 1}{maxHops}\right)\frac{1}{|S|}\left[\sum_{pod \in S}\left(1 - \frac{n}{maxHops}\right)(W1.RV1 + W2.RV2)\right]$$

*Equ. 3 Risk rating RR - Variant 3*

The risk rating for the pod "frontend" 110 is

$$RR|_{\text{frontend}} = 1\frac{1}{|S|}\left[\sum_{pod \in S}\left(1 - \frac{n}{maxHops}\right)(W1.RV1 + W2.RV2)\right]$$

$$= 1\frac{1}{4}\left[1(0.3*3 + 0.7*0) + \frac{2}{3}(0.3*3 + 0.7*8) + \frac{2}{3}(0.3*6 + 0.7*7.5)\right.$$

$$\left. + \frac{1}{3}(0.3*10 + 0.7*0)\right] = 2.73$$

Repeating the calculation for the other pods aux 120, gate 130 and db 140 results in the following risk ratings RR:

*Tab. 8 Risk ratings RR according to Equ. 3*

| pod | frontend | aux* | gate* | db |
|---|---|---|---|---|
| $RR|_{pod}$ | 2.73 | 1.57 | 1.96 | 0.67 |

Also according to Equ. 3, the vulnerable pod "gate" 130 shall be updated first as it has a higher risk rating RR than the vulnerable pod "aux" 120.

It is, however, not just possible to take the inbound hops NIH into account, but also outbound hops NOH. An example for such an equation is given below:

$$RR|_{\text{source pod}} = W_{In}\left(1 - \frac{\min\left(NIH|_{\text{source pod}}\right) - 1}{maxHops}\right)\frac{1}{|S|}\sum_{pod \in S}\frac{W1.RV1 + W2.RV2}{n+1}$$

$$+ W_{Out}\left(1 - \frac{\min\left(NOH|_{\text{source pod}}\right) - 1}{maxHops}\right)$$

*Equ. 4 Risk rating RR - Variant 4*

Equ. 4 considers the fact that direct access to the internet from a compromised pod can open new exploitation and post-exploitation scenarios and therefore should be considered by the equation as well. The factor $\left(1 - \frac{\min\left(NIH|_{\text{source pod}}\right) - 1}{maxHops}\right)\sum_{pod \in S}\frac{W1.RV1 + W2.RV2}{n+1}$ in the equation is the risk rating RR according to Equ. 1. In the example below, the weight $W_{In}$ weights inbound risks, whereas the weight $W_{Out}$ weights outbound risks. E.g., we set $W_{In}=0.7$ and $W_{Out}=0.3$ and $W1=W2=1$. The risk rating RR for the pods in the Kubernetes cluster according to Fig. 1 is:

$$RR|_{\text{frontend}} = 0.7 * 18.58 + 0.3\left(1 - \frac{1-1}{3}\right) = 13.3$$

$$RR|_{\text{aux}} = 0.7 * 13 + 0.3\left(1 - \frac{2-1}{3}\right) = 9.3$$

$$RR|_{\text{gate}} = 0.7 * 15.78 + 0.3\left(1 - \frac{2-1}{3}\right) = 11.2$$

$$RR|_{\text{db}} = 0.7 * 6.83 + 0.3\left(1 - \frac{3-1}{3}\right) = 4.98$$

Also according to Equ. 4, the pod "gate" 130 shall be updated before updating the pod "aux".

Finally, another variant for calculating RR is presented next:

$$RR|_{\text{source pod}} = \frac{W_{In}}{(W_{In} + W_{Out})|S|}\sum_{n=0}^{maxHops}(W1.RV1 + W2.RV2)\left(1 - \frac{n}{maxHops}\right)$$

$$+ W_{Out}\left(1 - \frac{\min\left(NOH|_{\text{source pod}}\right) - 1}{maxHops}\right)$$

*Equ. 5 Risk rating RR - Variant 5*

Using Tab. 2, Tab. 3 and Tab. 4, and setting $W_{In}=7$ and $W_{Out} = 3$, RR for the pod "frontend" 110 is:

$$RR|_{\text{frontend}} = \frac{7}{10 * 4}\left[1(0.3 * 3 + 0.7 * 0) + \frac{2}{3}(0.3 * 3 + 0.7 * 8) + \frac{2}{3}(0.3 * 6 + 0.7 * 7.5)\right.$$

$$\left. + \frac{1}{3}(0.3 * 10 + 0.7 * 0)\right] + 3 * 1 = 4.91$$

Repeating the calculation for the remaining pods results in the following risk ratings RR:

*Tab. 9 Risk ratings RR according to Equ. 5*

| pod | frontend | aux* | gate* | db |
|---|---|---|---|---|
| **RR\|pod** | 4.91 | 3.65 | **4.07** | 2.4 |

So also according to Equ. 5, the pod "gate" 130 should be updated before the pod "aux" 120. In addition to defining a sequence for updating vulnerable pods, the risk rating RR may be used to define risk more generally. For example, with respect to the result in Tab. 9, a monitoring service for new vulnerabilities of open-source software components used in the pods can be set-up ensuring that patches fixing new vulnerabilities are applied without delay. Generally, the higher RR is for a certain pod the more urgent monitoring should be done.

In a second application example, the manifests in Listings 1-4 are reused, however, no network policies are present. For comparison, the risk scores and weights were taken unchanged from Tab. 3. Since no network policies are present, every pod can freely communicate with every other pod. The Kubernetes cluster 200 according to Listings 1-4, the identified pods 110-140 and the communication relationship shown by arrows 170, 180 between pods is shown in Fig. 2.

The minimum number of inbound and outbound hops for this configuration are given in Tab. 10:

*Tab. 10 Minimum of inbound and outbound hops for second application example*

| Pod | frontend | aux | gate | db |
|---|---|---|---|---|
| **min(NIH)** | 1 | 2 | 2 | 2 |
| **min(NOH)** | 1 | 2 | 2 | 2 |

Note that, e.g., the pod "db" 140 can be reached from an external user 160 by just two (inbound) hops, namely in a first hop from the external user 160 to the pod "frontend" 110 and a second hop from "frontend" 110 to "db" 140.

Using Equ. 1 for the risk rating RR, the risk ratings RR considering the changed communication relationship for the pods are:

$$RR|_{\text{frontend}} = \left(1 - \frac{1-1}{3}\right)\left(\underbrace{\frac{3+0}{1}}_{frontend} + \underbrace{\frac{3+8}{2}}_{aux} + \underbrace{\frac{6+7.5}{2}}_{gate} + \underbrace{\frac{10+0}{2}}_{db}\right) = 20.25$$

$$RR|_{\text{aux}} = \left(1 - \frac{2-1}{3}\right)\left(\underbrace{\frac{3+8}{1}}_{aux} + \underbrace{\frac{3+0}{2}}_{frontend} + \underbrace{\frac{6+7.5}{2}}_{gate} + \underbrace{\frac{10+0}{2}}_{db}\right) = 16.17$$

$$RR|_{\text{gate}} = \left(1 - \frac{2-1}{3}\right)\left(\underbrace{\frac{6+7.5}{1}}_{gate} + \underbrace{\frac{10+0}{2}}_{db} + \underbrace{\frac{3+0}{2}}_{frontend} + \underbrace{\frac{3+8}{2}}_{aux}\right) = 17$$

$$RR|_{\text{db}} = \left(1 - \frac{2-1}{3}\right)\left(\underbrace{\frac{10+0}{1}}_{db} + \underbrace{\frac{6+7.5}{2}}_{gate} + \underbrace{\frac{3+0}{2}}_{frontend} + \underbrace{\frac{3+8}{2}}_{aux}\right) = 15.83$$

In summary, the risk ratings according to Equ. 1 are:

*Tab. 11 Risk ratings RR according to Equ. 1*

| pod | frontend | aux* | gate* | db |
|---|---|---|---|---|
| RR|_{pod} | 20.25 | 16.17 | 17 | 15.83 |

Also for the Kubernetes cluster 200 in Fig. 2 and the assumed values RV1, RV2, W1, W2, it is found that the vulnerability of "gate" 130 poses a higher risk than "aux" 120 and thus "gate" 130 should be updated first. After this, the pod "aux" 120 is updated.

Just for comparison, the calculation is repeated using Equ. 2 and assuming WF=2, W1=0.3 and W2=0.7 as above:

$$RR|_{\text{frontend}} = 1\frac{1}{2+4-1}\left[\overbrace{2(0.3*3)}^{frontend} + \overbrace{1(0.3*3+0.7*8)}^{aux} + \overbrace{1(0.3*6+0.7*7.5)}^{gate} + \overbrace{1(0.3*10)}^{db}\right]$$

$$= 3.67$$

$$RR|_{\text{aux}} = \frac{2}{3}\frac{1}{5}\left[\overbrace{2(0.3*3+0.7*8)}^{aux} + \overbrace{1(0.3*3)}^{frontend} + \overbrace{1(0.3*6+0.7*7.5)}^{gate} + \overbrace{1(0.3*10)}^{db}\right] = 3.19$$

$$RR|_{\text{gate}} = \frac{2}{3}\frac{1}{5}\left[\overbrace{2(0.3*6+0.7*7.5)}^{gate} + \overbrace{1(0.3*3)}^{frontend} + \overbrace{1(0.3*3+0.7*8)}^{aux} + \overbrace{1(0.3*10)}^{db}\right] = 3.27$$

$$RR|_{\text{db}} = \frac{2}{3}\frac{1}{5}\left[\overbrace{2(0.3*10)}^{db} + \overbrace{1(0.3*3)}^{frontend} + \overbrace{1(0.3*3+0.7*8)}^{aux} + \overbrace{1(0.3*6+0.7*7.5)}^{gate}\right] = 2.72$$

For the second example, the risk ratings according to Equ. 2 are:

*Tab. 12 Risk ratings RR according to Equ. 2*

| pod | frontend | aux* | gate* | db |
|---|---|---|---|---|
| RR|_{pod} | 3.67 | 3.19 | 3.27 | 2.72 |

Thus, the pod "gate" 130 shall be updated before the pod "aux" 120.

Comparing the risk ratings RR for the pods according to Equ. 1 between the 1st and the 2nd application example (see Tab. 6 and Tab. 11) indicates that the risk increased considerably by removing network policies. A similar result is obtained by comparing ratings RR for the pods according to Equ. 2 (see Tab. 7 and Tab. 12).

The calculation of risk ratings RR may also be used to improve the security of the Kubernetes cluster by adding or amending network policies. Assume that initially the Kubernetes cluster allows communication according to the second application example, see Fig. 2. Analyzing the cluster and calculating the risk rating RR according to Equ. 1 yields the results given in Tab. 11. Let us assume further that the vulnerabilities of the vulnerable pods "gate" 130 and "aux" 120 cannot be fixed, e.g. because no patch is available. In such a case or in other cases too, network policies may be either added or amended thereby restricting access to the vulnerable pods 120, 130, see cluster 100 in Fig. 1.

In other words, adding the network policies given in Listings 5-8 to the manifest of Listings 1-4 changes allowed communication from the second to the first application example, or in other words from Fig. 2 to Fig. 1. Doing so, reduces the risk rating considerably, e.g. for the pod "aux" 120 according to Equ. 1 from 16.17 to 13.

Thus, the risk ratings may be used to either add network policies or compare network policies. Put differently, a first network policy resulting in lower risk ratings is - at least security wise - preferred to a second network policy resulting in higher risk ratings.

In a third application example, the Kubernetes cluster 300 according to the manifest in Listings 1, 3 to 8 and 9 is considered. Listing 9 replaces Listing 2 as used in the first and second application examples:

```
apiVersion: v1
 kind: Pod
 metadata:
 name: aux
 namespace: default
 labels:
  app: aux
  spec:
 containers:
 - name: aux
  image: nginx:latest
  ports:
  - containerPort: 3000
   protocol: TCP
   ---
   apiVersion: v1
   kind: Service
   metadata:
 name: aux
 namespace: default
 spec:
 ports:
 - node Port: 30112
  port: 80
  protocol: TCP
  targetPort: 3000
 selector:
  app.kubernetes.io/name: aux
 type: NodePort
 Listing 9
```

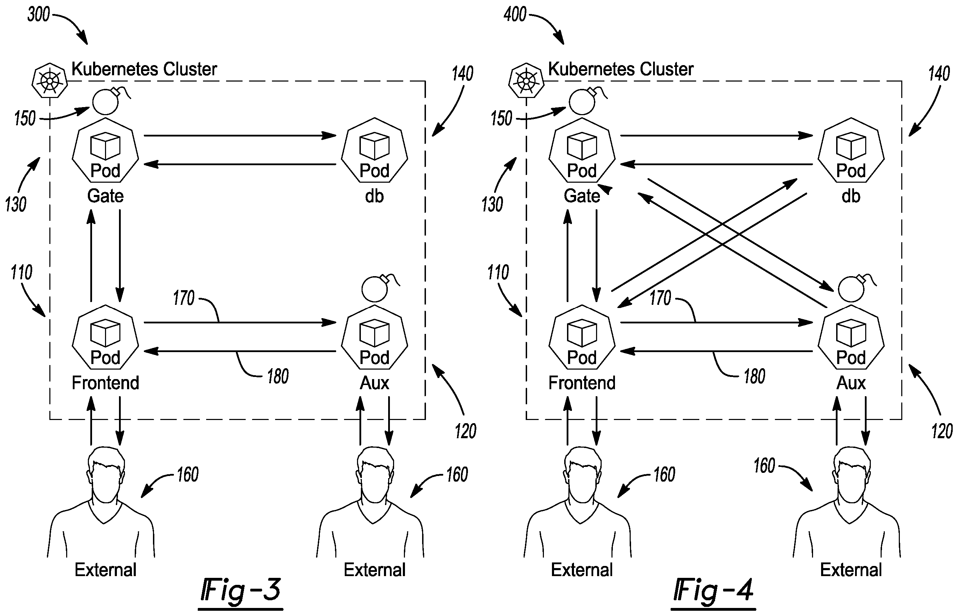

According to Listing 9, the pod "aux" 120 is also accessible from outside the Kubernetes cluster, e.g. by the external user 160 shown on the right hand side in Fig. 3. The communication relationship between the pods 110-140 and the outside 160 are shown in Fig. 3 by arrows 170, 180.

The minimum number of inbound and outbound hops for the configuration of Fig. 3 are given in Tab. 3.

*Tab. 13 Minimum of inbound and outbound hops for third application example*

| Pod | frontend | aux | gate | db |
| --- | --- | --- | --- | --- |
| min(NIH) | 1 | 1 | 2 | 3 |
| min(NOH) | 1 | 1 | 2 | 3 |

Using the same equation for the risk rating RR, the risk ratings considering the changed communication relationship for the pods become:

$$RR|_{\text{frontend}} = \left(1 - \frac{1-1}{3}\right)\left(\underbrace{\frac{3+0}{1}}_{frontend} + \underbrace{\frac{3+8}{2}}_{aux} + \underbrace{\frac{6+7.5}{2}}_{gate} + \underbrace{\frac{10+0}{3}}_{db}\right) = 18.58$$

$$RR|_{\text{aux}} = \left(1 - \frac{1-1}{3}\right)\left(\underbrace{\frac{3+8}{1}}_{aux} + \underbrace{\frac{3+0}{2}}_{frontend} + \underbrace{\frac{6+7.5}{3}}_{gate} + \underbrace{\frac{10+0}{4}}_{db}\right) = 19.5$$

$$RR|_{\text{gate}} = \left(1 - \frac{2-1}{3}\right)\left(\underbrace{\frac{6+7.5}{1}}_{gate} + \underbrace{\frac{10+0}{2}}_{db} + \underbrace{\frac{3+0}{2}}_{frontend} + \underbrace{\frac{3+8}{3}}_{aux}\right) = 15.78$$

$$RR|_{\text{db}} = \left(1 - \frac{3-1}{3}\right)\left(\underbrace{\frac{10+0}{1}}_{db} + \underbrace{\frac{6+7.5}{2}}_{gate} + \underbrace{\frac{3+0}{3}}_{frontend} + \underbrace{\frac{3+8}{4}}_{aux}\right) = 6.83$$

For the configuration of the Kubernetes cluster according to Fig. 3 and the assumed values RV1, RV2, W1, W2, it is found that the vulnerability of "aux" 120 poses a higher risk than "gate" 130 and thus should be updated first. After this, the pod "gate" 130 shall be updated.

In a fourth application example, the Kubernetes cluster 400 according to Listings 1, 9, 3 and 4 is considered. As no network policies are present, every pod 110-140 within the cluster can communicate with every other pod (see Fig. 4).

The minimum number of inbound and outbound hops for the configuration of Fig. 4 are given in Tab. 4.

*Tab. 14Minimum of inbound and outbound hops for fourth application example*

| Pod | frontend | aux | gate | db |
|---|---|---|---|---|
| min(NIH) | 1 | 1 | 2 | 2 |
| min(NOH) | 1 | 1 | 2 | 2 |

Using the same equation for the risk rating RR, the risk ratings considering the changed communication relationship for the pods become:

$$RR|_{\text{frontend}} = \left(1 - \frac{1-1}{3}\right)\left(\underbrace{\frac{3+0}{1}}_{frontend} + \underbrace{\frac{3+8}{2}}_{aux} + \underbrace{\frac{6+7.5}{2}}_{gate} + \underbrace{\frac{10+0}{2}}_{db}\right) = 20.25$$

$$RR|_{\text{aux}} = \left(1 - \frac{1-1}{3}\right)\left(\underbrace{\frac{3+8}{1}}_{aux} + \underbrace{\frac{3+0}{2}}_{frontend} + \underbrace{\frac{6+7.5}{2}}_{gate} + \underbrace{\frac{10+0}{2}}_{db}\right) = 24.25$$

$$RR|_{\text{gate}} = \left(1 - \frac{2-1}{3}\right)\left(\underbrace{\frac{6+7.5}{1}}_{gate} + \underbrace{\frac{10+0}{2}}_{db} + \underbrace{\frac{3+0}{2}}_{frontend} + \underbrace{\frac{3+8}{2}}_{aux}\right) = 17$$

$$RR|_{\text{db}} = \left(1 - \frac{2-1}{3}\right)\left(\underbrace{\frac{10+0}{1}}_{db} + \underbrace{\frac{6+7.5}{2}}_{gate} + \underbrace{\frac{3+0}{2}}_{frontend} + \underbrace{\frac{3+8}{2}}_{aux}\right) = 15.83$$

For the configuration of the Kubernetes cluster according to Fig. 4 and the assumed values RV1, RV2, W1, W2, it is found that the vulnerability of "aux" 120 poses a higher risk than "gate" 130 and thus should be updated first. After this, the pod "gate" 130 is updated.

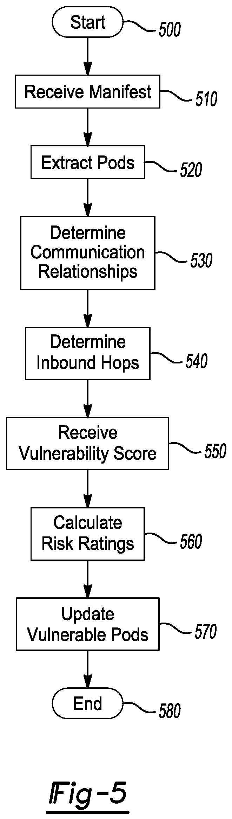

Fig. 5 shows the main steps in the computer-implemented method for updating software in a distributed computing environment. After the start of the method 500, the manifest from a container orchestration system, such as Kubernetes or Docker, is received 510 by a computer processor. The manifest describes either the full or at least a portion of the network topology in the distributed computing environment. In step 520, the computer processor extracts pods enumerated in the manifest, where a pod specifies a container or group of containers in the network topology. Next in step 530, for each pod in the manifest, the computer processor determines whether a given pod is able to communicate with another pod in the manifest, thereby defining a communication relationship between the given pod and another pod. The communication relationship between pods consider network policies that may be present in the manifest. In step 540, the computer processor determines for each pod in the manifest the minimum number of inbound hops for reaching the pod from the outside of the distributed computing environment. The vulnerability score for pods in the cluster is received in step 550, where the software stored or running on pods is looked up on a vulnerability database. In case vulnerable software is found, a vulnerability score > 0 is returned. Next in step 560, the computer calculates for each pod in the manifest a risk rating taking into account the vulnerability score of the pod, the minimum number of inbound hops for reaching the pod, the communication relationship between the given pod and other pods, and typically a criticality score taking into account the criticality of resources for the pod. Next, vulnerable pods in the manifest are sorted from highest risk rating to lowest risk rating. Updating vulnerable pods 570 is started with the pod having the highest risk rating and continues with the pod having the next lower risk rating etc. until all vulnerable pods are updated. By updating a vulnerable pod, the vulnerable software component on the pod is exchanged to a non-vulnerable version of the software component. Doing so not only reduces the risk that a vulnerability is exploited by attackers but also reduces the risk rating of the pod. In case a patch fixing the vulnerability of the software component on the pod does not exist or is not yet tested, the network policy for the manifest can be amended thereby reducing high risk ratings of vulnerable pods. After a patch is available and preferably has been tested, the vulnerable software component is updated (patched) to a non-vulnerable version of the software component. The disclosed method ends with step 580.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

**Claims**

1. A computer-implemented method for updating software in a distributed computing environment, comprising:

   - receiving, by a computer processor, a manifest from a container orchestration system, where the manifest describes a portion of network topology in the distributed computing environment;
   - extracting, by the computer processor, pods enumerated in the manifest, where a pod specifies a container or group of containers in the network topology;
   - for each pod in the manifest, determining, by the computer processor, whether a given pod is able to communicate with another pod in the manifest, thereby defining a communication relationship between the given pod and the another pod;
   - for each pod in the manifest, determining, by the computer processor, the minimum number of inbound hops for reaching the pod from the outside of the distributed computing environment;
   - for each pod in the manifest, receiving, by the computer processor, a vulnerability score for the pod considering software on the pod;
   - for each pod in the manifest, calculating, by the computer processor, a risk rating taking into account the vulnerability score of the pod, the minimum number of inbound hops for reaching the pod, and the communication relationship between the given pod and other pods;
   - updating pods in the manifest in accordance with the calculated risk ratings.

2. The computer-implemented method of claim 1 wherein the vulnerability score is indicative of the severity of a software vulnerability of the pod in the network topology.

3. The computer-implemented method of claim 1 or 2 wherein the vulnerability score is from a vulnerability database.

4. The computer-implemented method of any one of the preceding claims wherein the risk rating for a given pod sums up contributions of vulnerability scores for pods being reachable from the given pod by n hops, where n is less than a threshold.

5. The computer-implemented method according to any one of the preceding claims, further comprises:

   - for each pod in the manifest, setting a criticality score taking into account the criticality of resources of the pod;
   - for each pod in the manifest, calculating, by the computer processor, the risk rating additionally taking into account the criticality score for the pod.

6. The computer-implemented method of claim 5 wherein the risk rating for a given pod sums up contributions of criticality scores for pods being reachable from the given pod by n hops, where n is less than a threshold.

7. The computer-implemented method according to any one of the preceding claims, further comprises:

   - for each pod in the manifest, determining, by the computer processor, the minimum number of outbound hops for the pod reaching the outside of the distributed computing environment;
   - for each pod in the manifest, calculating, by the computer processor, the risk rating additionally taking into account the minimum number of outbound hops for the pod.

8. The computer-implemented method according to any one of the preceding claims further comprises sorting pods in the manifest from highest risk rating to lowest risk rating and updating pods with highest risk rating before updating pods with lower risk ratings.

9. The computer-implemented method according to any one of the preceding claims further comprises updating pods in the manifest by exchanging a vulnerable software component to a non-vulnerable software component.

10. A non-transitory computer-readable medium having computer-executable instructions that, upon execution of the instructions by a processor of a computer, cause the computer to

- receive a manifest from a container orchestration system, where the manifest describes a portion of network topology in the distributed computing environment;
- extract pods enumerated in the manifest, where a pod specifies a container or group of containers in the network topology;
- for each pod in the manifest, determine whether a given pod is able to communicate with another pod in the manifest, thereby defining a communication relationship between the given pod and the another pod;
- for each pod in the manifest, determine the minimum number of inbound hops for reaching the pod from the outside of the distributed computing environment;
- for each pod in the manifest, receive a vulnerability score for the pod considering software on the pod;
- for each pod in the manifest, calculate a risk rating taking into account the vulnerability score of the pod, the minimum number of inbound hops for reaching the pod, and the communication relationship between the given pod and other pods;
- updating pods in the manifest in accordance with the calculated risk ratings.

11. A computer-implemented method for updating software in a distributed computing environment, comprising:

- receiving, by a computer processor, a manifest from a container orchestration system, where the manifest describes a portion of network topology in the distributed computing environment;
- extracting, by the computer processor, pods enumerated in the manifest, where a pod specifies a container or group of containers in the network topology;
- for each pod in the manifest, determining, by the computer processor, whether the given pod is able to communicate with another pod in the manifest, thereby defining a communication relationship between the given pod and the other pod;
- for each pod in the manifest, determining, by the computer processor, the minimum number of inbound hops for reaching the pod from the outside of the distributed computing environment;
- for each pod in the manifest, receiving, by the computer processor, a vulnerability score for the pod considering software on the pod;
- for each pod in the manifest, calculating, by the computer processor, a risk rating taking into account the vulnerability score of the pod, the minimum number of inbound hops for reaching the pod, and the communication relationship between the given pod and other pods; and
- updating network policies for pods in the manifest based on the calculated risk ratings, where a network policy specifies traffic flow between entities in the network topology.

12. The computer-implemented method of claim 11 wherein the risk rating for a given pod sums up contributions of vulnerability scores for pods being reachable from the given pod by n hops, where n is less than a threshold.

13. The computer-implemented method according to claim 11 or 12, further comprises:

- for each pod in the manifest, setting a criticality score taking into account the criticality of resources of the pod;
- for each pod in the manifest, calculating, by the computer processor, the risk rating additionally taking into account the criticality score for the pod.

14. The computer-implemented method of claim 13 wherein the risk rating for a given pod sums up contributions of criticality scores for pods being reachable from the given pod by n hops, where n is less than a threshold.

15. The computer-implemented method according to any one of claims 11 to 14, further comprises:

- for each pod in the manifest, determining, by the computer processor, the minimum number of outbound hops for the pod reaching the outside of the distributed computing environment; and
- for each pod in the manifest, calculating, by the computer processor, the risk rating additionally taking into account the minimum number of outbound hops for the pod.

_Fig-1_

_Fig-2_

Fig-3

Fig-4

Start — 500

↓

Receive Manifest — 510

↓

Extract Pods — 520

↓

Determine
Communication
Relationships — 530

↓

Determine
Inbound Hops — 540

↓

Receive
Vulnerability Score — 550

↓

Calculate
Risk Ratings — 560

↓

Update
Vulnerable Pods — 570

↓

End — 580

*Fig-5*

## EUROPEAN SEARCH REPORT

**Application Number**

EP 25 19 6743

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/222222 A1 (PAGNOZZI MATTIA [IT] ET AL) 13 July 2023 (2023-07-13) * paragraph [0082] * ----- | 1-15 | INV. G06F21/57 H04L9/40 G06F8/65 |
| A | US 2020/249928 A1 (ZENG SAI [US] ET AL) 6 August 2020 (2020-08-06) * paragraphs [0005], [0038] * * paragraphs [0043] - [0056] * * paragraphs [0081] - [0084] * * paragraph [0109] * * figure 1 * ----- | 1-15 | |
| A | ISLAM SHAMIM MD SHAZIBUL ET AL: "XI Commandments of Kubernetes Security: A Systematization of Knowledge Related to Kubernetes Security Practices", 2020 IEEE SECURE DEVELOPMENT (SECDEV), IEEE, 28 September 2020 (2020-09-28), pages 58-64, XP033844560, DOI: 10.1109/SECDEV45635.2020.00025 [retrieved on 2020-10-18] * VII. Continuous update, pages 61-62 * ----- | 1-15 | |
| | | | **TECHNICAL FIELDS SEARCHED (IPC)** G06F H04L |
| A | US 2023/179573 A1 (SOSNOVICH ADI [IL] ET AL) 8 June 2023 (2023-06-08) * paragraphs [0022] - [0024] * * paragraphs [0033] - [0039] * ----- | 1-15 | |

The present search report has been drawn up for all claims

| Place of search | Date of completion of the search | Examiner |
|---|---|---|
| The Hague | 29 October 2025 | Segura, Gustavo |

EPO FORM 1503 03.82 (P04C01)

## ANNEX TO THE EUROPEAN SEARCH REPORT
## ON EUROPEAN PATENT APPLICATION NO.

EP 25 19 6743

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2025

| Patent document cited in search report | Publication date | Patent family member(s) | Publication date |
|---|---|---|---|
| US 2023222222 A1 | 13-07-2023 | EP 4457675 A1<br>US 11507672 B1<br>US 2023222222 A1<br>US 2025061208 A1<br>WO 2023137053 A1 | 06-11-2024<br>22-11-2022<br>13-07-2023<br>20-02-2025<br>20-07-2023 |
| US 2020249928 A1 | 06-08-2020 | CN 113330723 A<br>DE 112020000123 T5<br>GB 2593657 A<br>JP 7292786 B2<br>JP 2022520005 A<br>US 2020249928 A1<br>WO 2020157607 A1 | 31-08-2021<br>26-08-2021<br>29-09-2021<br>19-06-2023<br>28-03-2022<br>06-08-2020<br>06-08-2020 |
| US 2023179573 A1 | 08-06-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63569262 B